# EUROPEAN PATENT APPLICATION

(11) **EP 4 832 099 A1**
(43) Date of publication of application: **28.10.2026**
(21) Application number: 24908035.9
(22) Date of filing: 17.12.2024
(51) Int. Cl.: H01M 4/505, H01M 4/525, C01G 53/00, H01M 4/131, H01M 10/052, H01M 4/02

(54) **CATHODE ACTIVE MATERIAL FOR LITHIUM SECONDARY BATTERY, METHOD FOR PREPARING SAME, AND LITHIUM SECONDARY BATTERY COMPRISING SAME**

(30) Priority: 18.12.2023 KR 20230185229
(71) Applicant: POSCO Holdings Inc., Pohang-si, Gyeongsangbuk-do 37859 (KR)
(72) Inventor: YU, Byongyong, Pohang-si, Gyeongsangbuk-do 37859 (KR); NAM, Sang Cheol, Pohang-si, Gyeongsangbuk-do 37859 (KR); PARK, Inchul, Pohang-si, Gyeongsangbuk-do 37859 (KR); LEE, Hayeon, Pohang-si, Gyeongsangbuk-do 37859 (KR); CHOI, Sol, Pohang-si, Gyeongsangbuk-do 37859 (KR); SONG, Jun-Hyuk, Pohang-si, Gyeongsangbuk-do 37859 (KR); CHOI, Geunho, Pohang-si, Gyeongsangbuk-do 37859 (KR); KIM, Jieun, Pohang-si, Gyeongsangbuk-do 37859 (KR); LEE, Su Hyun, Pohang-si, Gyeongsangbuk-do 37859 (KR); MUN, Junyoung, Pohang-si, Gyeongsangbuk-do 37859 (KR)
(74) Representative: Pfenning, Meinig & Partner mbB
(86) International application number: PCT/KR2024/020543
(87) International publication number: WO 2025/135752

(57) **Abstract**

The present invention relates to a positive electrode active material for a lithium secondary battery, comprising lithium metal oxide particles having a lithium- and manganese-rich composition and doped with sodium, wherein the lithium metal oxide has a structure in which lithium layers and transition metal layers are alternately stacked, the sodium is more heavily doped into the lithium layers among the lithium layers and the transition metal layers, and the sodium is concentration-doped in a surface portion of the lithium metal oxide particles.

## Description

### [TECHNICAL FIELD]

The present invention relates to a positive electrode active material for a lithium secondary battery, a method for manufacturing the same, and a lithium secondary battery including the same.

### [BACKGROUND ART]

As the range of use of lithium secondary batteries has expanded from small electronic devices to electric vehicles, energy storage devices, and the like, demand for positive electrode materials having excellent high energy density and high output characteristics has increased.

In this regard, a lithium- and manganese-rich layered lithium transition metal oxide has a very high capacity of 240 mAh/g or more, and thus has attracted attention as a candidate group for next-generation positive electrode active materials, and research thereon has recently been actively conducted.

However, compared with a general positive electrode active material, a lithium- and manganese-rich layered lithium transition metal oxide utilizes oxidation/reduction reactions of oxygen in addition to oxidation/reduction of transition metals due to a high lithium content and a relatively low transition metal ratio in the structure. Since these oxidation/reduction reactions of oxygen are driven at a high voltage during first charging, electrolyte decomposition is caused by high reactivity with an electrolyte solution at a surface, and irreversible migration of transition metals occurs, thereby reducing the number of lithium reinsertion sites during discharge and causing a problem of reduced initial efficiency. In addition, as cycles proceed thereafter, phase decomposition due to oxygen gas generation is accelerated, thereby causing a problem of deterioration of lifespan characteristics.

### [DETAILED DESCRIPTION OF THE INVENTION]

### [Technical Problem]

Accordingly, an object of the present invention is to provide a positive electrode active material for a lithium secondary battery, which is a lithium metal oxide having a lithium- and manganese-rich composition and has improved capacity characteristics according to improved initial efficiency as well as improved lifespan characteristics, a method for manufacturing the same, and a lithium secondary battery including the same.

### [Technical Solution]

One embodiment of the present invention provides a positive electrode active material for a lithium secondary battery, including lithium metal oxide particles having a lithium- and manganese-rich composition and doped with sodium, wherein the lithium metal oxide has a structure in which lithium layers and transition metal layers are alternately stacked, the sodium is more heavily doped into the lithium layers among the lithium layers and the transition metal layers, and the sodium is concentration-doped in a surface portion of the lithium metal oxide particles.

When XPS (X-ray Photoelectron Spectroscopy) analysis is performed on an outermost surface of the lithium metal oxide particles, a molar ratio of sodium to manganese (Na/Mn) may be 342 times or more an average molar ratio of sodium to manganese (Na/Mn) in the lithium metal oxide.

When XPS (X-ray Photoelectron Spectroscopy) analysis is performed on an outermost surface of the lithium metal oxide particles, a molar ratio of sodium to manganese (Na/Mn) may be 0.58 or more.

The lithium metal oxide may have a molar ratio of sodium to the lithium metal oxide of 0.01 to 0.2.

The lithium metal oxide may have a molar ratio of cobalt to the lithium metal oxide of 0.05 or less.

The lithium metal oxide may have a molar ratio of lithium to the lithium metal oxide of 1.1 to 1.3.

The lithium metal oxide may have a molar ratio of nickel to the lithium metal oxide of 0.1 to 0.3.

The lithium metal oxide may have a molar ratio of manganese to the lithium metal oxide of 0.5 to 0.7.

An average particle diameter (D50) of the lithium metal oxide particles may be 10 µm or less.

The lithium metal oxide may be represented by the following Chemical Formula 1.

[Chemical Formula 1] Li₁₊ₐ(NiₓCo_{y}Mn_{z}Na_{w1}M_{w2})O₂

In Chemical Formula 1, 0.1≤a≤0.3, 0.1≤x≤0.3, 0≤y≤0.05, 0.5≤z≤0.7, 0.01≤w1≤0.2, 0≤w2≤0.2, a+x+y+z+w1+w2=1, and M is Zr, Al, B, Y, Mg, Ti, Nb, W, Sc, Si, V, Fe, Mo, Ce, Hf, Ta, La, Sr, Sn, Sb, Zn, Cu, Ge, Ru, Ir, or a combination thereof.

Another embodiment of the present invention provides a method for manufacturing a positive electrode active material for a lithium secondary battery, the method including: pulverization-mixing a lithium raw material, a nickel raw material, a manganese raw material, and a sodium raw material to form a mixture; primarily calcining the mixture to form lithium metal oxide particles having a lithium- and manganese-rich composition; and secondarily calcining the lithium metal oxide particles to form lithium metal oxide particles in which sodium is concentration-doped in a surface portion, wherein a primary calcination temperature is 420°C to 800°C, and a secondary calcination temperature is 820°C to 930°C.

The primary calcination temperature may be 420°C to 600°C.

The pulverization-mixing may be performed by solid-state pulverization-mixing.

The pulverization-mixing may be performed at a stirring speed of 200 rpm to 600 rpm.

The pulverization-mixing may be performed for 5 hours to 15 hours.

Another embodiment of the present invention provides a positive electrode for a lithium secondary battery, including the above-described positive electrode active material.

Still another embodiment of the present invention provides a lithium secondary battery including the positive electrode for a lithium secondary battery.

### [Advantageous Effects]

A positive electrode active material for a lithium secondary battery according to one embodiment of the present invention includes lithium metal oxide particles having a lithium- and manganese-rich composition, wherein sodium is preferentially doped into lithium layers and concentration-doped on a surface of the lithium metal oxide particles, whereby initial efficiency is improved to improve capacity characteristics, and lifespan characteristics can also be improved. In addition, rate characteristics of the positive electrode active material for a lithium secondary battery according to one embodiment of the present invention can be improved.

### [BRIEF DESCRIPTION OF THE DRAWINGS]

FIG. 1 is a conceptual view showing a method for manufacturing a positive electrode active material for a lithium secondary battery according to one embodiment of the present invention.
FIG. 2 is a graph showing results of thermogravimetric analysis (TGA) of a mixture according to Experimental Example 1.
FIG. 3 is a graph showing results of X-ray diffraction (XRD) analysis of calcined products according to Experimental Example 2.
FIG. 4 is a graph showing results of X-ray diffraction (XRD) analysis of positive electrode active materials manufactured according to Example 1, Comparative Example 1, and Comparative Example 2.
FIG. 5 shows TEM-EDS element mapping images of positive electrode active materials manufactured according to Example 1, Comparative Example 1, and Comparative Example 2.
FIG. 6 is a graph showing SEM-EDX line-scan Na concentration analysis results of positive electrode active materials manufactured according to Example 1 and Comparative Example 2.
FIG. 7 is a graph showing XPS (X-ray Photoelectron Spectroscopy) analysis results of positive electrode active materials manufactured according to Example 1, Comparative Example 1, and Comparative Example 2.
FIG. 8 is a graph showing evaluation of initial discharge capacity at a high temperature of 60°C of lithium secondary batteries manufactured according to Example 1, Comparative Example 1, and Comparative Example 2.
FIG. 9 is a graph showing evaluation of initial discharge capacity at a high temperature of 45°C of lithium secondary batteries manufactured according to Examples 1 to 2 and 4 to 5, Comparative Example 1, and Comparative Example 2.
FIG. 10 is a graph showing evaluation of lifespan characteristics at room temperature of 25°C of lithium secondary batteries manufactured according to Examples 1 to 2 and 4 to 5, Comparative Example 1, and Comparative Example 2.
FIG. 11 is a graph showing evaluation of rate characteristics of lithium secondary batteries manufactured according to Example 1, Comparative Example 1, and Comparative Example 2.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless otherwise specifically stated, % means wt%, and 1 ppm means 0.0001 wt%.

In the present specification, the term "combination(s) thereof" described in a Markush-type expression means one or more mixtures or combinations selected from the group consisting of the components described in the Markush-type expression, and means that one or more selected from the group consisting of the components is included.

Hereinafter, embodiments of the present invention will be described in detail so that a person having ordinary skill in the art to which the present invention pertains can easily practice the present invention. However, the present invention may be embodied in various different forms and is not limited to the embodiments described herein.

### 1. Positive Electrode Active Material

A positive electrode active material for a lithium secondary battery according to one embodiment of the present invention includes a lithium transition metal oxide having a lithium- and manganese-rich composition. A lithium transition metal oxide having a lithium- and manganese-rich composition has a low nickel content, but may involve oxidation/reduction reactions of not only transition metals but also anions (oxygen) during operation of a battery. In addition, excess lithium may be present in a transition metal layer as well as in a lithium layer, and thus insertion and deinsertion efficiency of lithium ions can be increased. Accordingly, an initial discharge capacity may be 240 mAh/g or more, and capacity characteristics can be remarkably improved compared with a positive electrode material having a general NCM composition. In addition, since the contents of relatively expensive nickel and cobalt can be reduced and the content of inexpensive manganese can be increased, economic feasibility is excellent.

More specifically, the lithium metal oxide may have a molar ratio of lithium to the lithium metal oxide of 1.1 to 1.3. As the content of lithium increases, the amount of lithium capable of participating in insertion and deinsertion of lithium ions increases, and capacity characteristics may be improved. However, when the content of lithium is excessively large, phase stability problems may occur due to excessive occurrence of oxygen oxidation/reduction reactions, and lifespan characteristics may deteriorate due thereto.

In addition, the lithium metal oxide may have a molar ratio of manganese to the lithium metal oxide of 0.5 to 0.7. When the content of manganese is excessively small, manufacturing costs increase, active material safety decreases, and the capacity-improving effect due to containing an excessive amount of manganese may be insignificant. When the content of manganese is excessively large, lifespan characteristics may deteriorate due to excessive use of oxygen oxidation/reduction reactions, and manganese may be dissolved.

In addition, the lithium metal oxide may have a molar ratio of nickel to the lithium metal oxide of 0.1 to 0.3. When the content of nickel satisfies the above range, capacity, output, and lifespan characteristics of the battery may be more preferably implemented. When the content of nickel is excessively small, the amount of oxygen oxidation/reduction reactions excessively increases, and lifespan characteristics may deteriorate. When the content of nickel is excessively large, the amount of oxygen oxidation/reduction reactions decreases, and capacity and output characteristics may deteriorate.

In addition, the lithium metal oxide according to the present invention may be a compound of a solid solution phase in which Li₂MnO₃ having a monoclinic structure and LiMO₂ having a rhombohedral structure are mixed, wherein M=Ni, Co, Mn, Na, Zr, Al, B, Y, Mg, Ti, Nb, W, Sc, Si, V, Fe, Mo, Ce, Hf, Ta, La, Sr, Sn, Sb, Zn, Cu, Ge, Ru, Ir, or a combination thereof.

Meanwhile, the lithium metal oxide according to the present invention is in the form of secondary particles formed by aggregation of a plurality of primary particles. In the present specification, "primary particle" means a minimum particle unit distinguished as one lump when a cross-section of a positive electrode active material is observed through a scanning electron microscope (SEM), and may be composed of one crystal grain or may be composed of a plurality of crystal grains. In the present specification, "crystal grain" means a distinguishable region in which atoms in a primary particle form a lattice structure in a predetermined direction.

However, compared with a general positive electrode material, a transition metal oxide having a lithium- and manganese-rich composition utilizes oxidation/reduction reactions of oxygen in addition to oxidation/reduction of transition metals due to a high lithium content and a relatively low transition metal ratio in the structure. Since these oxidation/reduction reactions of oxygen are driven at a high voltage during first charging, electrolyte decomposition is caused by high reactivity with an electrolyte solution at a surface, and irreversible migration of transition metals and oxygen gas release are caused, thereby reducing the number of lithium reinsertion sites during discharge and causing a problem of reduced initial efficiency. In addition, as cycles proceed thereafter, phase decomposition due to oxygen gas release is accelerated, thereby causing a problem of deterioration of lifespan characteristics.

Accordingly, the lithium metal oxide according to the present invention has a structure in which lithium layers and transition metal layers are alternately stacked, and is doped with sodium, wherein the sodium is more heavily doped into the lithium layers among the lithium layers and the transition metal layers. More specifically, sodium has a property of being doped only into a lithium ion layer having a similar ion size, and has a greater doping preference into the lithium layers than into the transition metal layers. Accordingly, irreversible oxygen gas release of the lithium transition metal oxide can be alleviated, thereby improving initial discharge capacity and rate characteristics according to improved initial efficiency, and lifespan characteristics can be improved by delaying phase decomposition. Meanwhile, the doping preference of sodium into the lithium layers can be confirmed through XRD and DFT calculation analysis.

In addition, the sodium is concentration-doped in a surface portion of the lithium metal oxide particles. Accordingly, the problem of oxygen gas release, which occurs particularly intensively at the surface of the lithium metal oxide particles, can be more efficiently alleviated, thereby improving initial discharge capacity and rate characteristics according to improved initial efficiency, and lifespan characteristics can be improved by delaying phase decomposition.

Meanwhile, in the present specification, the "surface portion" of the lithium metal oxide particles may mean a region located within a distance of (4/5)r to r from the center of the particle when a distance from the center of the lithium metal oxide particle to a surface thereof is defined as r.

As sodium is concentration-doped in the surface portion of the lithium metal oxide particles as described above, when XPS (X-ray Photoelectron Spectroscopy) analysis is performed on the outermost surface of the lithium metal oxide particles, a molar ratio of sodium to manganese (Na/Mn) may be 342 times or more an average molar ratio of sodium to manganese (Na/Mn) in the lithium metal oxide, and more specifically 350 times or more, 355 times or more, or 360 times or more and 380 times or less.

Alternatively, when XPS (X-ray Photoelectron Spectroscopy) analysis is performed on the outermost surface of the lithium metal oxide particles, the molar ratio of sodium to manganese (Na/Mn) may be 0.58 or more, and more specifically 0.60 or more or 0.61 or more and 0.70 or less.

When the molar ratio of sodium to manganese (Na/Mn) at the outermost surface is excessively small, the effect of concentration-doping sodium in the surface portion is reduced, and thus the effect of improving initial discharge capacity, rate characteristics, and lifespan characteristics may be reduced. When the molar ratio of sodium to manganese (Na/Mn) at the outermost surface is excessively large, an excessive amount of sodium may act as an impurity phase, and initial discharge capacity, rate characteristics, and lifespan characteristics may rather deteriorate.

Meanwhile, a structure in which sodium is concentration-doped in the surface portion of the lithium metal oxide particles can be easily obtained by controlling a mixing and pulverizing process of raw materials and calcination process conditions, as described below, and will be described in more detail in the method for manufacturing a positive electrode active material described below.

In addition, the lithium metal oxide may have a molar ratio of sodium to the lithium metal oxide of 0.01 to 0.2. When the content of sodium in the lithium metal oxide is excessively small, the effect of concentration-doping sodium in the surface portion may also be reduced, and thus the effect of improving initial discharge capacity, rate characteristics, and lifespan characteristics may be reduced. When the content of sodium in the lithium metal oxide is excessively large, an excessive amount of sodium may act as an impurity phase, and initial discharge capacity, rate characteristics, and lifespan characteristics may rather deteriorate.

In addition, the lithium metal oxide may have a molar ratio of cobalt to the lithium metal oxide of 0.05 or less, 0.03 or less, or may contain no cobalt. Cobalt is generally introduced in a predetermined amount to improve lifespan and rate characteristics of a battery, but is problematic in that it is expensive. As described above, the lithium metal oxide according to the present invention can alternatively implement effects of improving lifespan and rate characteristics according to concentration-doping of sodium in the surface portion, and thus lifespan and rate characteristics can be suitably implemented even when the content of cobalt is reduced as in the above range. Accordingly, the positive electrode active material according to the present invention can simultaneously implement economic feasibility and high-quality electrochemical characteristics.

An average particle diameter (D50) of the lithium metal oxide particles may be 10 µm or less, and more specifically 5 µm or less. The present inventors confirmed that the average particle diameter (D50) of lithium metal oxide particles manufactured according to the manufacturing method of the present invention is obtained as small as the above range. Accordingly, the diffusion distance of lithium ions can be reduced, and effects of improving capacity and rate characteristics can be more preferably implemented.

In the present specification, the average particle diameter (D50) may be defined as a particle diameter corresponding to 50% of a volume cumulative amount in a particle diameter distribution curve of particles. The average particle diameter (D50) may be measured, for example, using a laser diffraction method.

More specifically, the lithium metal oxide according to the present invention may be represented by the following Chemical Formula 1.

[Chemical Formula 1] Li₁₊ₐ(NiₓCo_{y}Mn_{z}Na_{w1}M_{w2})O₂

In Chemical Formula 1, 0.1≤a≤0.3, 0.1≤x≤0.3, 0≤y≤0.05, 0.5≤z≤0.7, 0.01≤w1≤0.2, 0≤w2≤0.2, a+x+y+z+w1+w2=1, and M is Zr, Al, B, Y, Mg, Ti, Nb, W, Sc, Si, V, Fe, Mo, Ce, Hf, Ta, La, Sr, Sn, Sb, Zn, Cu, Ge, Ru, Ir, or a combination thereof.

In the lithium metal oxide of Chemical Formula 1, lithium may be included in an amount corresponding to 1+a, wherein a may satisfy 0.1≤a≤0.3. When a is excessively small, the effect of improving capacity characteristics due to the excessive lithium content may be insignificant. However, when a is excessively large, lifespan characteristics may deteriorate due to decreased phase stability.

In the lithium metal oxide of Chemical Formula 1, nickel may be included in an amount corresponding to x, that is, 0.1≤x≤0.3. When the nickel content is excessively small, the amount of oxygen oxidation/reduction reactions excessively increases, and lifespan characteristics may deteriorate. When the nickel content is excessively large, the amount of oxygen oxidation/reduction reactions decreases, and capacity and output characteristics may deteriorate.

In the lithium metal oxide of Chemical Formula 1, cobalt may be included in an amount corresponding to y, that is, 0≤y≤0.05 or 0≤y≤0.03. When the cobalt content is excessively small, sufficient rate characteristics may be difficult to achieve. When the cobalt content is excessively large, the cost of raw materials increases overall and reversible capacity may decrease.

In the lithium metal oxide of Chemical Formula 1, manganese may be included in an amount corresponding to z, that is, 0.5≤z≤0.7. When the manganese content is excessively small, production cost may increase and capacity may deteriorate. When the manganese content is excessively large, lifespan characteristics may deteriorate due to excessive use of oxygen oxidation/reduction reactions, and manganese dissolution may occur.

In the lithium metal oxide of Chemical Formula 1, sodium may be included in an amount corresponding to w1, that is, 0.01≤w1≤0.2. When the content of sodium is excessively small, the effect of concentration-doping sodium in the surface portion may also be reduced, and thus the effect of improving initial discharge capacity, rate characteristics, and lifespan characteristics may be reduced. When the content of sodium is excessively large, an excessive amount of sodium may act as an impurity phase, and initial discharge capacity, rate characteristics, and lifespan characteristics may rather deteriorate.

In the lithium metal oxide of Chemical Formula 1, M, which is another doping element, may be included in an amount corresponding to w2, that is, 0≤w2≤0.2. Here, M is Zr, Al, B, Y, Mg, Ti, Nb, W, Sc, Si, V, Fe, Mo, Ce, Hf, Ta, La, Sr, Sn, Sb, Zn, Cu, Ge, Ru, Ir, or a combination thereof. M, which is another doping element, may be included in an appropriate amount to implement another doping effect within a range in which electrochemical characteristics of the battery are not deteriorated.

### 2. Method for Manufacturing Positive Electrode Active Material

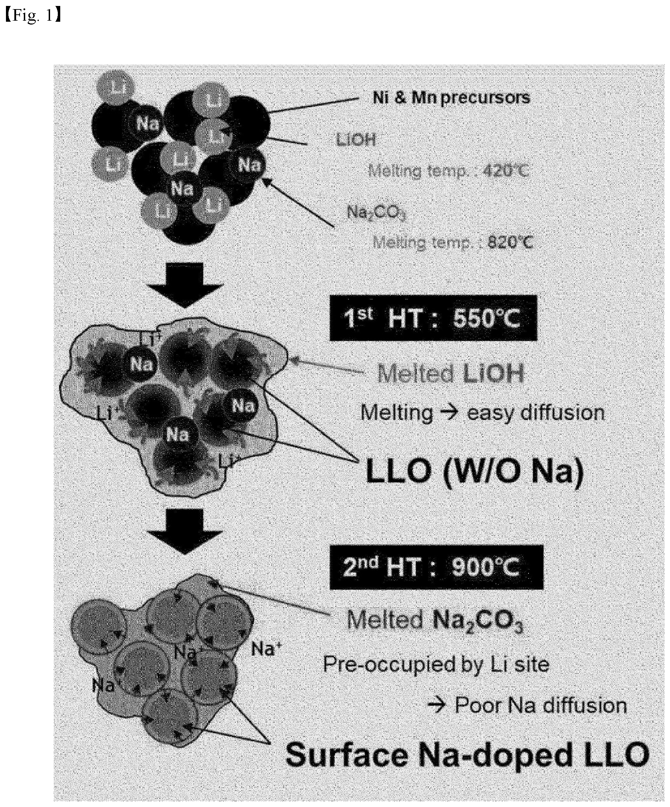

FIG. 1 is a conceptual view showing a method for manufacturing a positive electrode active material for a lithium secondary battery according to another embodiment of the present invention.

Referring to FIG. 1, another embodiment of the present invention provides a method for manufacturing a positive electrode active material for a lithium secondary battery, the method including: pulverization-mixing a lithium raw material, a nickel raw material, a manganese raw material, and a sodium raw material to form a mixture; primarily calcining the mixture to form lithium metal oxide particles having a lithium- and manganese-rich composition; and secondarily calcining the lithium metal oxide particles to form lithium metal oxide particles in which sodium is concentration-doped in a surface portion, wherein a primary calcination temperature is 420°C to 800°C, and a secondary calcination temperature is 820°C to 930°C.

Hereinafter, the method for manufacturing a positive electrode active material for a lithium secondary battery according to another embodiment of the present invention will be described step by step.

First, a lithium raw material, a nickel raw material, a manganese raw material, and a sodium raw material are pulverization-mixed to form a mixture.

As the lithium raw material, a lithium-containing sulfate, nitrate, acetate, carbonate, oxalate, citrate, halide, hydroxide, oxyhydroxide, or the like may be used, and is not particularly limited as long as it can be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a combination thereof, but is not limited thereto.

The lithium raw material may more suitably be LiOH·H₂O. Accordingly, because the melting point of LiOH·H₂O is low, reactivity of lithium ions is first maximized, and the effect of concentration-doping sodium in the surface portion of the lithium metal oxide particles can be more preferably implemented.

The sodium raw material is a sodium-containing compound and may be Na₂CO₃, NaSO₄, NaF, NaCl, or a combination thereof, but is not necessarily limited thereto.

The sodium raw material may more suitably be Na₂CO₃. Accordingly, because the melting point of Na₂CO₃ is high, the effect of concentration-doping sodium in the surface portion of the lithium metal oxide particles can be more preferably implemented.

The pulverization-mixing may be mechanical pulverization-mixing, and may be performed, for example, by a ball mill process.

At this time, the pulverization-mixing may be performed at a stirring speed of 200 rpm to 600 rpm. When the stirring speed during pulverization-mixing is excessively small, sodium aggregates, and the effect of concentration-doping sodium in the surface portion of the lithium metal oxide particles may be reduced. When the stirring speed during pulverization-mixing is excessively large, the sodium precursor becomes excessively small in size, and diffusion of sodium starts in a solid state, and the effect of concentration-doping sodium in the surface portion of the lithium metal oxide particles may be reduced.

In addition, the pulverization-mixing may be performed for 5 hours to 15 hours. When the pulverization-mixing time is excessively short, sodium is not mixed well, and the effect of concentration-doping sodium in the surface portion of the lithium metal oxide particles may be reduced. When the pulverization-mixing time is excessively long, sodium is excessively pulverized, and diffusion of sodium starts even in a solid state, and thus the effect of concentration-doping sodium in the surface portion of the lithium metal oxide particles may be reduced.

In addition, the pulverization-mixing may be performed by solid-state pulverization-mixing, rather than wet pulverization-mixing. When pulverization-mixing is performed in a solid state, aggregation of the material is alleviated, and the effect of concentration-doping sodium in the surface portion of the lithium metal oxide particles can be more preferably implemented.

Meanwhile, input amounts of the lithium raw material, the nickel raw material, the manganese raw material, and the sodium raw material may be appropriately adjusted and introduced at a stoichiometric ratio corresponding to a target composition of the lithium metal oxide.

Next, the mixture is primarily calcined to form lithium metal oxide particles having a lithium- and manganese-rich composition.

Thereafter, the lithium metal oxide particles are secondarily calcined to form lithium metal oxide particles in which sodium is concentration-doped in a surface portion.

Through the primary calcination and the secondary calcination, lithium metal oxide particles having a structure in which sodium is concentration-doped in the surface portion of the lithium metal oxide particles can be formed. Specifically, through the primary calcination, a lithium metal oxide having a lithium- and manganese-rich composition, in which crystallinity is secured to a certain extent, can be primarily formed. Thereafter, through the secondary calcination, lithium metal oxide particles having a structure in which sodium is concentration-doped in the surface portion of the lithium metal oxide particles can be formed.

The primary calcination temperature is 420°C to 800°C, and more specifically 420°C to 600°C. The primary calcination temperature range is a temperature range equal to or higher than the melting point of the lithium raw material and lower than the melting point of the sodium raw material. Accordingly, during primary calcination, lithium ions diffuse into the crystal structure to form a lithium metal oxide in which crystallinity is secured to a certain extent, while the doping amount of sodium can be reduced as much as possible. Accordingly, through a subsequent secondary calcination process, lithium metal oxide particles having a structure in which sodium is concentration-doped in the surface portion of the lithium metal oxide particles can be formed. When the primary calcination temperature is excessively low, crystallinity of the lithium metal oxide is excessively deteriorated, and electrochemical characteristics may deteriorate. When the primary calcination temperature is excessively high, the effect of improving initial discharge capacity, rate characteristics, and lifespan characteristics according to concentration-doping sodium in the surface portion may be reduced.

The primary calcination time may be 6 hours to 14 hours, and more specifically 8 hours to 12 hours. When the primary calcination time is excessively short, crystallinity of the lithium metal oxide is excessively deteriorated, and electrochemical characteristics may deteriorate. When the primary calcination time is excessively long, the effect of improving initial discharge capacity, rate characteristics, and lifespan characteristics according to concentration-doping sodium in the surface portion may be reduced.

In addition, the secondary calcination temperature is 820°C to 930°C, and more specifically 850°C to 920°C. The secondary calcination temperature range is a temperature range equal to or higher than the melting point of the sodium raw material. Accordingly, during secondary calcination, doping of sodium into the lithium metal oxide can be intensively performed, and lithium metal oxide particles having a structure in which sodium is concentration-doped in the surface portion of the lithium metal oxide particles can be formed. When the secondary calcination temperature is excessively low, doping of sodium into the lithium metal oxide itself is not sufficiently performed, and the effect of improving initial discharge capacity, rate characteristics, and lifespan characteristics according to concentration-doping sodium in the surface portion may be reduced. When the secondary calcination temperature is excessively high, sodium is excessively doped even into the inside of the lithium metal oxide particles, and the effect of improving initial discharge capacity, rate characteristics, and lifespan characteristics according to concentration-doping sodium in the surface portion may be reduced.

The secondary calcination time may be 6 hours to 14 hours, and more specifically 8 hours to 12 hours. When the secondary calcination time is excessively short, doping of sodium into the lithium metal oxide itself is not sufficiently performed, and the effect of improving initial discharge capacity, rate characteristics, and lifespan characteristics according to concentration-doping sodium in the surface portion may be reduced. When the secondary calcination time is excessively long, sodium is excessively doped even into the inside of the lithium metal oxide particles, and the effect of improving initial discharge capacity, rate characteristics, and lifespan characteristics according to concentration-doping sodium in the surface portion may be reduced.

The primary calcination and the secondary calcination may be performed in an oxygen atmosphere. Accordingly, crystallinity of the lithium metal oxide is improved, and electrochemical characteristics can be more preferably implemented.

### 3. Positive Electrode and Lithium Secondary Battery

Still another embodiment of the present invention provides a positive electrode for a lithium secondary battery, including the above-described positive electrode active material.

More specifically, the positive electrode may include a positive electrode current collector and a positive electrode active material layer disposed on the positive electrode current collector and including the above-described positive electrode active material.

The positive electrode current collector is not particularly limited as long as it has conductivity without causing a chemical change in the battery, and examples thereof may include stainless steel, aluminum, nickel, titanium, calcined carbon, or aluminum or stainless steel surface-treated with carbon, nickel, titanium, silver, or the like. In addition, the positive electrode current collector may generally have a thickness of 3 µm to 500 µm, and fine irregularities may be formed on a surface of the positive electrode current collector to increase adhesion of the positive electrode active material. For example, the positive electrode current collector may be used in various forms such as a film, a sheet, a foil, a net, a porous body, a foam, and a nonwoven fabric.

The positive electrode active material layer may include a binder and/or a conductive material together with the above-described positive electrode active material.

At this time, the binder serves to improve adhesion between positive electrode active material particles and adhesion between the positive electrode active material and the positive electrode current collector. Specific examples thereof may include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluorine rubber, or various copolymers thereof, and one thereof alone or a mixture of two or more thereof may be used, but the binder is not limited thereto. The binder may be included in an amount of 1 wt% to 30 wt% based on the total weight of the positive electrode active material layer.

The conductive material is used to impart conductivity to the electrode, and may be used without particular limitation as long as it has electron conductivity and does not cause a chemical change in the battery to be configured. Specific examples thereof may include graphite such as natural graphite or artificial graphite; carbon-based materials such as carbon black, acetylene black, Ketjen black, channel black, furnace black, lamp black, thermal black, and carbon fibers; metal powder or metal fibers such as copper, nickel, aluminum, and silver; conductive whiskers such as zinc oxide and potassium titanate; conductive metal oxides such as titanium oxide; or conductive polymers such as polyphenylene derivatives, and one thereof alone or a mixture of two or more thereof may be used, but the conductive material is not limited thereto. The conductive material may generally be included in an amount of 1 wt% to 30 wt% based on the total weight of the positive electrode active material layer.

The positive electrode may be manufactured according to a conventional method for manufacturing a positive electrode, except that the above-described positive electrode active material is used.

Specifically, the positive electrode may be manufactured by applying, onto a positive electrode current collector, a composition for forming a positive electrode active material layer including the above-described positive electrode active material and, as necessary, optionally including a binder, a conductive material, or a solvent, and then drying and rolling the same. At this time, the types and contents of the positive electrode active material, the binder, and the conductive material are as described above.

The solvent may be a solvent generally used in the art, and examples thereof may include dimethyl sulfoxide (DMSO), isopropyl alcohol, N-methylpyrrolidone (NMP), acetone, or water, and one thereof alone or a mixture of two or more thereof may be used. The amount of the solvent used is sufficient as long as it can dissolve or disperse the positive electrode active material, the conductive material, and the binder in consideration of a coating thickness and manufacturing yield of the slurry, and can provide a viscosity capable of exhibiting excellent thickness uniformity during subsequent coating for manufacturing the positive electrode.

Alternatively, the positive electrode may be manufactured by casting the composition for forming the positive electrode active material layer on a separate support, and then laminating a film obtained by peeling the composition from the support onto a positive electrode current collector.

Still another embodiment of the present invention provides a lithium secondary battery including the above-described positive electrode for a lithium secondary battery.

More specifically, the lithium secondary battery may include a positive electrode, a negative electrode, a separator, and an electrolyte.

The lithium secondary battery may optionally further include a battery case accommodating an electrode assembly of the positive electrode, the negative electrode, and the separator, and a sealing member sealing the battery case.

The negative electrode may include a negative electrode current collector and a negative electrode active material layer positioned on the negative electrode current collector.

The negative electrode current collector is not particularly limited as long as it has high conductivity without causing a chemical change in the battery, and examples thereof may include copper, stainless steel, aluminum, nickel, titanium, calcined carbon, copper or stainless steel surface-treated with carbon, nickel, titanium, silver, or the like, an aluminum-cadmium alloy, and the like. In addition, the negative electrode current collector may generally have a thickness of 3 µm to 500 µm, and like the positive electrode current collector, fine irregularities may be formed on a surface of the current collector to enhance bonding force of the negative electrode active material. For example, the negative electrode current collector may be used in various forms such as a film, a sheet, a foil, a net, a porous body, a foam, and a nonwoven fabric.

The negative electrode active material layer may optionally include a binder and a conductive material together with a negative electrode active material. As an example, the negative electrode active material layer may be manufactured by applying and drying, on a negative electrode current collector, a composition for forming a negative electrode active material layer including a negative electrode active material and optionally including a binder and a conductive material, or may be manufactured by casting the composition for forming the negative electrode on a separate support and then laminating a film obtained by peeling the composition from the support onto the negative electrode current collector.

As the negative electrode active material, a compound capable of reversible intercalation and deintercalation of lithium may be used. Specific examples thereof may include carbonaceous materials such as artificial graphite, natural graphite, graphitized carbon fibers, and amorphous carbon; metallic compounds capable of alloying with lithium, such as Si, Al, Sn, Pb, Zn, Bi, In, Mg, Ga, Cd, a Si alloy, a Sn alloy, or an Al alloy; metal oxides capable of doping and dedoping lithium, such as SiOβ (0<β<2), SnO₂, vanadium oxide, and lithium vanadium oxide; or composites including the metallic compound and a carbonaceous material, such as a Si-C composite or a Sn-C composite, and one thereof or a mixture of two or more thereof may be used. In addition, a metal lithium thin film may be used as the negative electrode active material. Further, as the carbon material, both low-crystalline carbon and high-crystalline carbon may be used. Representative examples of the low-crystalline carbon include soft carbon and hard carbon, and representative examples of the high-crystalline carbon include amorphous, plate-like, flake-like, spherical, or fibrous natural graphite or artificial graphite, Kish graphite, pyrolytic carbon, mesophase pitch-based carbon fibers, meso-carbon microbeads, mesophase pitches, and high-temperature calcined carbon such as petroleum or coal tar pitch-derived cokes.

The binder and the conductive material may be the same as those described above for the positive electrode.

The separator separates the negative electrode and the positive electrode and provides a movement path for lithium ions, and may be used without particular limitation as long as it is commonly used as a separator in lithium secondary batteries. In particular, a separator having low resistance to ion movement of the electrolyte and excellent electrolyte solution impregnation ability is preferable. Specifically, a porous polymer film, for example, a porous polymer film made of a polyolefin-based polymer such as an ethylene homopolymer, a propylene homopolymer, an ethylene/butene copolymer, an ethylene/hexene copolymer, or an ethylene/methacrylate copolymer, or a laminated structure having two or more layers thereof may be used. In addition, a conventional porous nonwoven fabric, for example, a nonwoven fabric made of high-melting-point glass fibers, polyethylene terephthalate fibers, or the like, may also be used. In addition, a coated separator including a ceramic component or a polymer material may be used to secure heat resistance or mechanical strength, and may optionally be used in a single-layer or multilayer structure.

Examples of the electrolyte may include an organic liquid electrolyte, an inorganic liquid electrolyte, a solid polymer electrolyte, a gel-type polymer electrolyte, a solid inorganic electrolyte, a molten-type inorganic electrolyte, and the like, which can be used when manufacturing a lithium secondary battery, but the electrolyte is not limited thereto.

Specifically, the organic liquid electrolyte may include an organic solvent and a lithium salt.

As the organic solvent, any solvent may be used without particular limitation as long as it can serve as a medium through which ions involved in an electrochemical reaction of the battery can move. Specifically, examples of the organic solvent may include ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles represented by R-CN, wherein R is a C2 to C20 linear, branched, or cyclic hydrocarbon group and may include a double-bond aromatic ring or an ether bond; amides such as dimethylformamide; dioxolanes such as 1,3-dioxolane; or sulfolanes. Among these, carbonate-based solvents are preferable, and a mixture of a cyclic carbonate having high ionic conductivity and high dielectric constant, which can improve charge/discharge performance of a battery, such as ethylene carbonate or propylene carbonate, and a low-viscosity linear carbonate-based compound, such as ethyl methyl carbonate, dimethyl carbonate, or diethyl carbonate, is more preferable. In this case, when the cyclic carbonate and the chain carbonate are mixed and used at a volume ratio of about 1:1 to about 1:9, excellent electrolyte performance may be exhibited.

The lithium salt may be used without particular limitation as long as it is a compound capable of providing lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The concentration of the lithium salt is preferably used within a range of 0.1 M to 2.0 M. When the concentration of the lithium salt is within the above range, the electrolyte has appropriate conductivity and viscosity, and thus excellent electrolyte performance can be exhibited and lithium ions can effectively move.

In addition to the above electrolyte components, the electrolyte may further include one or more additives, for example, for the purpose of improving lifespan characteristics of the battery, suppressing reduction in battery capacity, improving discharge capacity of the battery, and the like, such as a haloalkylene carbonate-based compound such as difluoroethylene carbonate, pyridine, triethyl phosphite, triethanolamine, cyclic ether, ethylene diamine, n-glyme, hexamethylphosphoric triamide, a nitrobenzene derivative, sulfur, a quinone imine dye, an N-substituted oxazolidinone, an N,N-substituted imidazolidine, ethylene glycol dialkyl ether, an ammonium salt, pyrrole, 2-methoxy ethanol, or aluminum trichloride. At this time, the additive may be included in an amount of 0.1 wt% to 5 wt% based on the total weight of the electrolyte.

As described above, since the lithium secondary battery including the positive electrode active material according to the present invention stably exhibits excellent discharge capacity, output characteristics, and capacity retention rate, the lithium secondary battery is useful for portable devices such as mobile phones, notebook computers, and digital cameras, and in the field of electric vehicles such as hybrid electric vehicles (HEVs).

Accordingly, still another embodiment of the present invention provides a battery module including the lithium secondary battery as a unit cell, and a battery pack including the same.

The battery module or battery pack may be used as a power source for one or more medium- to large-sized devices selected from power tools; electric vehicles including electric vehicles (EVs), hybrid electric vehicles, and plug-in hybrid electric vehicles (PHEVs); or power storage systems.

Hereinafter, embodiments of the present invention will be described in more detail through Examples. However, the following Examples are only preferred embodiments of the present invention, and the present invention is not limited by the following Examples.

### Example 1

### (1) Manufacture of Positive Electrode Active Material

(Pulverization-Mixing) LiOH·H₂O (Aldrich), Ni(OH)₂ (Aldrich), MnCO₃ (Aldrich), and Na₂CO₃ (Aldrich) were introduced in a solid state into a ball mill apparatus, and pulverization-mixed at a stirring speed of 500 rpm for 10 hours to form a mixture. At this time, Na₂CO₃ had an average particle diameter (D50) of 100 nm.

(Primary Calcination) Thereafter, the mixture was primarily calcined at 550°C for 10 hours under an air atmosphere to form a primarily calcined product.

(Secondary Calcination) Thereafter, the primarily calcined product was secondarily calcined at 900°C for 10 hours under an air atmosphere to form a final lithium metal oxide.

The final lithium metal oxide had a composition of Li₁.₁₅Na₀.₀₅Ni₀.₂Mn₀.₆O₂.

### (2) Manufacture of Lithium Secondary Battery

A slurry for manufacturing an electrode plate was prepared by mixing the manufactured positive electrode active material, a conductive material (carbon black, Denka black), and a binder (PVDF, KF1100) at 92.5:3.5:4 wt%, and adding NMP (N-methyl-2-pyrrolidone) to adjust viscosity such that a solid content was about 30%. The prepared slurry was coated on a 15 µm-thick Al foil using a doctor blade, and then dried and rolled. At this time, the electrode loading amount was about 14 mg/cm².

As the electrolyte solution, an electrolyte solution obtained by adding 3.0 vol% FEC based on the total amount of the electrolyte solution to 1 M LiPF₆ in EC:EMC=3:7 (vol%) was used, and a CR2032 coin cell was manufactured using a PP separator and a lithium negative electrode (200 µm, Honzo Metal).

### Example 2

A positive electrode active material and a lithium secondary battery were manufactured in the same manner as in Example 1, except that, in the primary calcination step, the calcination temperature was 500°C.

### Example 3

A positive electrode active material and a lithium secondary battery were manufactured in the same manner as in Example 1, except that, in the primary calcination step, the calcination temperature was 600°C.

### Example 4

A positive electrode active material and a lithium secondary battery were manufactured in the same manner as in Example 1, except that, in the primary calcination step, the calcination temperature was 700°C.

### Example 5

A positive electrode active material and a lithium secondary battery were manufactured in the same manner as in Example 1, except that, in the primary calcination step, the calcination temperature was 800°C.

### Reference Example 1

A positive electrode active material and a lithium secondary battery were manufactured in the same manner as in Example 1, except that, in the pulverization-mixing step, the average particle diameter (D50) of Na₂CO₃ was 300 nm.

### Reference Example 2

A positive electrode active material and a lithium secondary battery were manufactured in the same manner as in Example 1, except that, in the pulverization-mixing step, the process was performed at a stirring speed of 650 rpm.

### Reference Example 3

A positive electrode active material and a lithium secondary battery were manufactured in the same manner as in Example 1, except that, in the pulverization-mixing step, wet pulverization was performed by a wet ball mill instead of a solid-state ball mill.

### Comparative Example 1

A positive electrode active material and a lithium secondary battery were manufactured in the same manner as in Example 1, except that Na₂CO₃ (Aldrich) was not introduced in the pulverization-mixing step, and the process was not divided into primary calcination and secondary calcination but one-step calcination was performed at 900°C for 10 hours. The manufactured lithium metal oxide had a composition of Li₁.₂Ni₀.₂Mn₀.₆O₂.

### Comparative Example 2

A positive electrode active material and a lithium secondary battery were manufactured in the same manner as in Example 1, except that the process was not divided into primary calcination and secondary calcination but one-step calcination was performed at 900°C for 10 hours. The manufactured lithium metal oxide had a composition of Li₁.₁₅Na₀.₀₅Ni₀.₂Mn₀.₆O₂.

### Comparative Example 3

A positive electrode active material and a lithium secondary battery were manufactured in the same manner as in Example 1, except that, in the pulverization-mixing step, the process was performed at a stirring speed of 100 rpm.

Tables 1 and 2 below summarize process conditions of Examples, Comparative Examples, and Reference Examples, and Tables 3 to 5 below summarize evaluation results of physical properties of positive electrode active materials and electrochemical characteristics of lithium secondary batteries according to Experimental Examples 6 and 7 described below.

**[Table 1]**

| | Composition | Sodium Raw Material | | Pulverization-Mixing | | |
|---|---|---|---|---|---|---|
| | | Type | Average Particle Diameter (D50) (nm) | Process Type | Stirring Speed | Pulverization Time (h) |
| | | | | | (rpm) | |
| Example 1 | Li_{1.15}Na_{0.05}Ni_{0.2}Mn_{0.6}O₂ | Na₂CO₃ | 100 | Solid-State Ball Mill | 500 | 10 |
| Example 2 | | | 100 | | 500 | |
| Example 3 | | | 100 | | 500 | |
| Example 4 | | | 100 | | 500 | |
| Example 5 | | | 100 | | 500 | |
| Comparative Example 1 | Li_{1.2}Ni_{0.2}Mn_{0.6}O₂ | - | - | | 500 | |
| Comparative Example 2 | Li_{1.15}Na_{0.05}Ni_{0.2}Mn_{0.6}O₂ | Na₂CO₃ | 100 | | 500 | |
| Reference Example 1 | | | 300 | | 500 | |
| Comparative Example 3 | | | 100 | | 100 | |
| Reference Example 2 | | | 100 | | 650 | |
| Reference Example 3 | | | 100 | Wet Pulverization | 500 | |

**[Table 2]**

| | Primary Calcination | | Secondary Calcination | |
|---|---|---|---|---|
| | Temperature (°C) | Time (h) | Temperature (°C) | Time (h) |
| Example 1 | 550 | 10 | 900 | 10 |
| Example 2 | 500 | 10 | 900 | 10 |
| Example 3 | 600 | 10 | 900 | 10 |
| Example 4 | 700 | 10 | 900 | 10 |
| Example 5 | 800 | 10 | 900 | 10 |
| Comparative Example 1 | 900 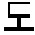 , 10h | | | |
| Comparative Example 2 | 900 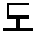 , 10h | | | |
| Reference Example 1 | 600 | 10 | 900 | 10 |
| Comparative Example 3 | 600 | 10 | 900 | 10 |
| Reference Example 2 | 600 | 10 | 900 | 10 |
| Reference Example 3 | 600 | 10 | 900 | 10 |

**[Table 3]**

| | Outermost Surface Na/Mn Molar Ratio | [Outermost Surface Na/Mn Molar Ratio]/[ICP Na/Mn Molar Ratio] | Average Particle Diameter (D50) (µm) |
|---|---|---|---|
| Example 1 | 0.618 | 365.4 | 0.5 |
| Example 2 | 0.617 | 364.8 | 0.5 |
| Example 3 | 0.602 | 355.9 | 0.5 |
| Example 4 | 0.591 | 344.4 | 0.5 |
| Example 5 | 0.585 | 345.9 | 0.5 |
| Comparative Example 1 | 0 | 0 | 0.5 |
| Comparative Example 2 | 0.574 | 339.5 | 0.5 |
| Reference Example 1 | 0.588 | 347.6 | 0.5 |
| Comparative Example 3 | 0.570 | 336.9 | 0.5 |
| Reference Example 2 | 0.602 | 354.7 | 0.7 |
| Reference Example 3 | 0.592 | 349.9 | 0.3 |

**[Table 4]**

| | 45°C Capacity | | | 60°C Capacity | | |
|---|---|---|---|---|---|---|
| | Charge Capacity (mAh/g) | Discharge Capacity (mAh/g) | Initial Efficiency (%) | Charge Capacity (mAh/g) | Discharge Capacity (mAh/g) | Initial Efficiency (%) |
| Example 1 | 329 | 258 | 78 | 358 | 266 | 74 |
| Example 2 | 374 | 281 | 75 | - | - | - |
| Example 3 | 364 | 270 | 74 | - | - | - |
| Example 4 | 356 | 259 | 73 | - | - | - |
| Example 5 | 360 | 260 | 72 | - | - | - |
| Comparative Example 1 | 340 | 241 | 71 | 396 | 240 | 61 |
| Comparative Example 2 | 332 | 242 | 73 | 358 | 252 | 70 |
| Reference Example 1 | 355 | 256 | 72 | - | - | - |
| Comparative Example 3 | 344 | 244 | 71 | - | - | - |
| Reference Example 2 | 357 | 253 | 71 | - | - | - |
| Reference Example 3 | 345 | 248 | 72 | - | - | - |

**[Table 5]**

| | Capacity Retention Rate (25°C, 50 cycles, %) | Rate Characteristics | | |
|---|---|---|---|---|
| | | 1C/0.1C (%) | 5C/0.1C (%) | 10C/0.1C (%) |
| Example 1 | 92 | 64 | 53 | 47 |
| Example 2 | 92 | - | - | - |
| Example 3 | 91 | - | - | - |
| Example 4 | 90 | - | - | - |
| Example 5 | 90 | - | - | - |
| Comparative Example 1 | 89 | 57 | 46 | 38 |
| Comparative Example 2 | 92 | 61 | 47 | 38 |
| Reference Example 1 | - | - | - | - |
| Comparative Example 3 | - | - | - | - |
| Reference Example 2 | - | - | - | - |
| Reference Example 3 | - | - | - | - |

### Experimental Example 1: Thermogravimetric Analysis (TGA)

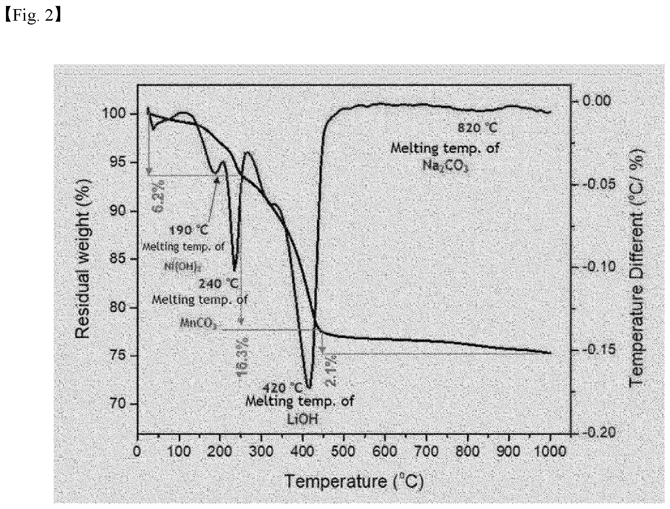

Thermogravimetric analysis (TGA) was performed on the mixture pulverization-mixed in Example 1, and the results are shown in FIG. 2.

Referring to FIG. 2, it was confirmed that the melting point of LiOH·H₂O, which is the lithium raw material, was about 420°C, and the melting point of Na₂CO₃, which is the sodium raw material, was about 820°C.

### Experimental Example 2: Evaluation of X-Ray Diffraction Analysis (XRD) of Primarily Calcined Product

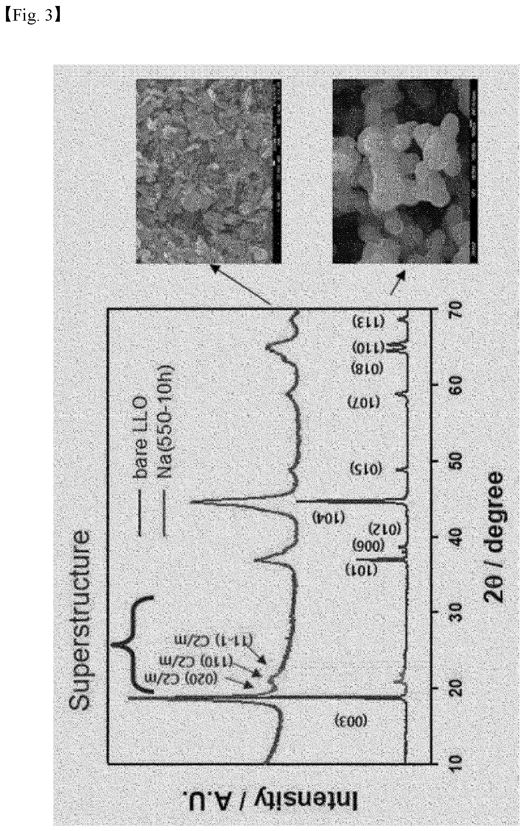

X-ray diffraction (XRD) analysis was performed on the primarily calcined product obtained by primary calcination of the mixture pulverization-mixed in Example 1, and the results are shown in FIG. 3.

Referring to FIG. 3, it was confirmed that the primarily calcined product also exhibited a super-structure peak, and thus a lithium-rich lithium metal oxide was formed, but crystallinity was somewhat low.

### Experimental Example 3: Evaluation of X-Ray Diffraction Analysis (XRD) of Positive Electrode Active Material

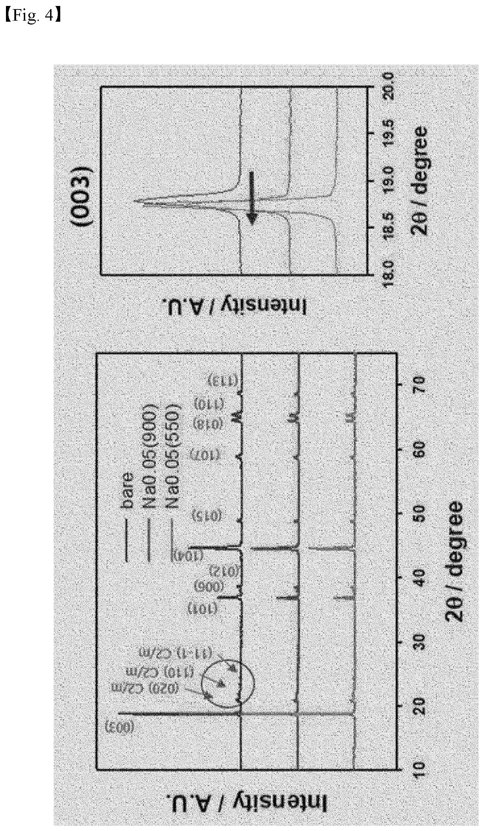

X-ray diffraction (XRD) analysis was performed on the positive electrode active materials manufactured according to Example 1, Comparative Example 1, and Comparative Example 2, and the results are shown in FIG. 4.

Referring to FIG. 4, it was confirmed that all of the positive electrode active materials of Example 1, Comparative Example 1, and Comparative Example 2 exhibited a very clear super-structure peak between 20° and 30°, and thus lithium-rich lithium metal oxides were well formed.

In addition, it was confirmed that the (003) plane peak of Example 1 and Comparative Example 2, in which sodium was doped, shifted to a lower angle direction compared with Comparative Example 1. This is a result of expansion of the c-axis length because sodium ions have a larger radius than lithium ions, and it was confirmed that sodium was well doped into the lattice of the lithium metal oxide in Example 1 and Comparative Example 2.

### Experimental Example 4: Evaluation of TEM-EDS Element Mapping Image of Positive Electrode Active Material

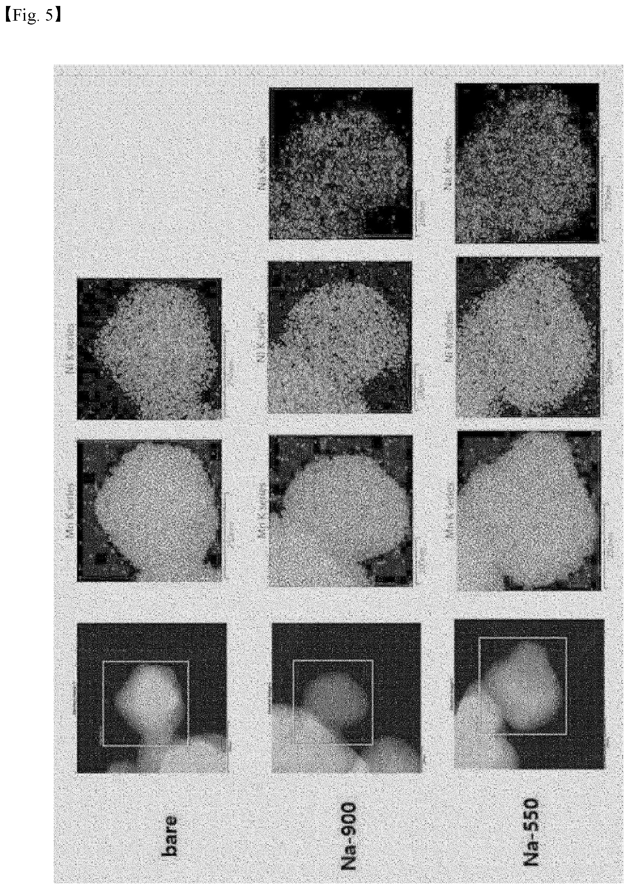

TEM (transmission electron microscopy)-EDS (Energy-dispersive X-ray spectroscopy) element mapping images of the positive electrode active materials manufactured according to Example 1, Comparative Example 1, and Comparative Example 2 were observed, and are shown in FIG. 5 in order.

Referring to FIG. 5, it was confirmed that nickel and manganese were uniformly distributed in particles of the positive electrode active materials of Example 1, Comparative Example 1, and Comparative Example 2, and in particular, it was confirmed that Na was doped into particles of the positive electrode active materials of Example 1 and Comparative Example 2.

### Experimental Example 5: Evaluation of SEM-EDX Line-Scan Concentration Analysis of Positive Electrode Active Material

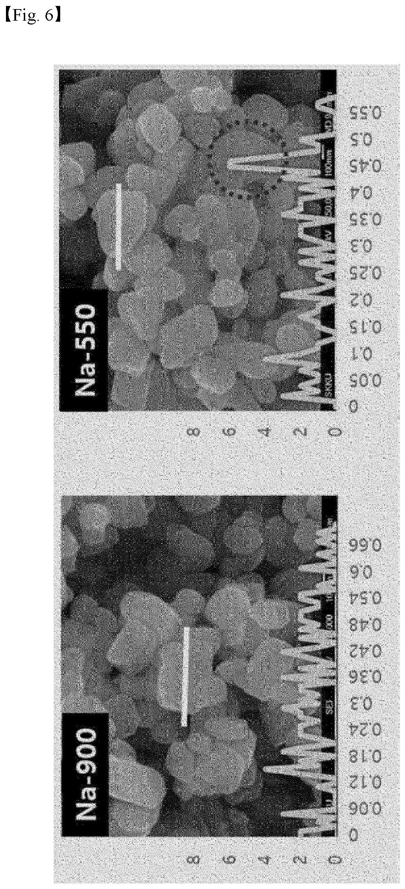

SEM (scanning electron microscopy)-EDX (Energy-dispersive X-ray spectroscopy) line-scan concentration analysis was performed on the positive electrode active materials manufactured according to Example 1 and Comparative Example 2, and the results are shown in FIG. 6.

Referring to FIG. 6, in the case of Example 1, it was confirmed that the sodium concentration was higher in the surface portion than in the center portion of the particle, and through this, it was confirmed that sodium was concentration-doped in the surface portion of the lithium metal oxide particles. In contrast, in the case of Comparative Example 1, it was confirmed that there was no concentration gradient tendency of sodium.

### Experimental Example 6: Evaluation of Physical Properties of Positive Electrode Active Material

### (1) Evaluation of Outermost Surface Na/Mn Molar Ratio of Lithium Metal Oxide Particles

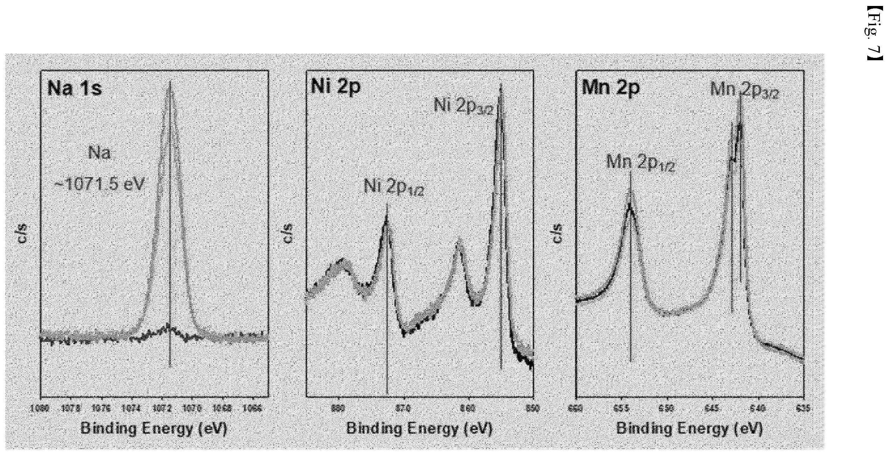

Powder was directly dispersed, and the outermost surface Na/Mn molar ratio of lithium metal oxide particles was evaluated through X-ray photoelectron spectroscopy (XPS) analysis. In addition, the derived outermost surface Na/Mn molar ratio of the lithium metal oxide particles was divided by the Na/Mn molar ratio of the average composition in the lithium metal oxide obtained through ICP component analysis, thereby evaluating the concentration degree of sodium doping in the surface portion of the lithium metal oxide particles. In this regard, XPS analysis results of the positive electrode active materials manufactured according to Example 1, Comparative Example 1, and Comparative Example 2 are shown in FIG. 7.

### (2) Evaluation of Average Particle Diameter (D50)

For active material powder, a particle diameter corresponding to 50% of a volume cumulative amount was measured using a laser diffraction method.

### Experimental Example 7: Evaluation of Electrochemical Characteristics of Lithium Secondary Battery

### (1) Evaluation of Initial Capacity and Initial Efficiency

After lithium secondary battery half cells were manufactured and aged at 25°C for 12 hours, a charge/discharge test was performed at 25°C, 45°C, and 60°C. For initial capacity evaluation, 200 mAh/g was used as a reference capacity, and charging was performed to 4.25 V at a constant current of 0.1 C, followed by switching to constant voltage, and charging was continued until the end current reached 0.05 C. After charging, a rest time of 10 minutes was provided, and discharge was performed to 2.5 V at a constant current of 0.1 C based on a reference capacity of 200 mAh/g.

### (2) Evaluation of Lifespan Characteristics (25°C, 50 cycles)

After lithium secondary battery half cells were manufactured, charging was performed at 25°C to 4.25 V at a constant current of 0.5 C, followed by switching to constant voltage, and charging was performed until the end current reached 0.05 C. After charging, a rest time of 10 minutes was provided, and discharge was performed to 2.5 V at a constant current of 1.0 C. Charging and discharging were performed 50 times under such charge/discharge cycle conditions, and a capacity retention rate of the 50th cycle relative to the first cycle was calculated.

### (3) Evaluation of Rate Characteristics

Output characteristics were evaluated by comparing the initial discharge capacity during 0.1 C charge-0.1 C discharge with the initial discharge capacity during 0.1 C charge-1 C/5 C/10 C discharge.

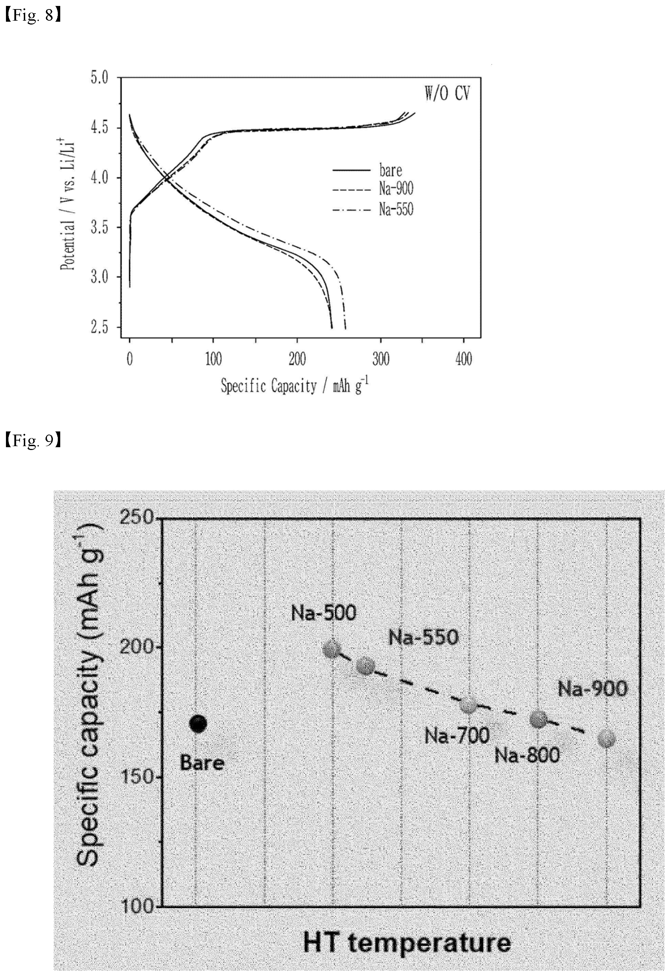

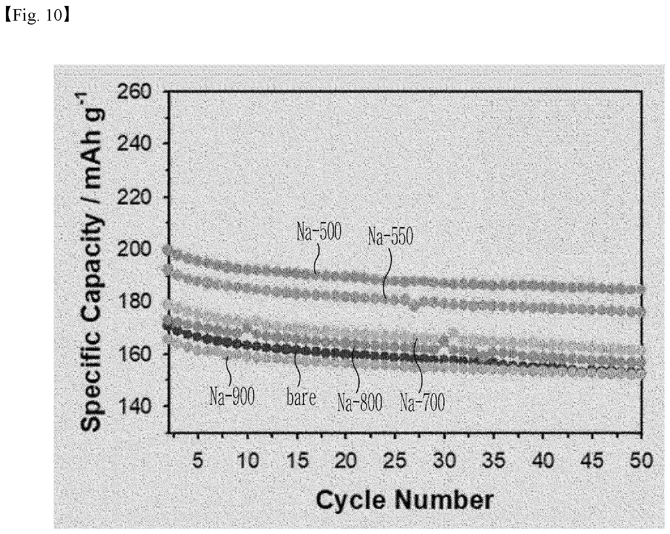

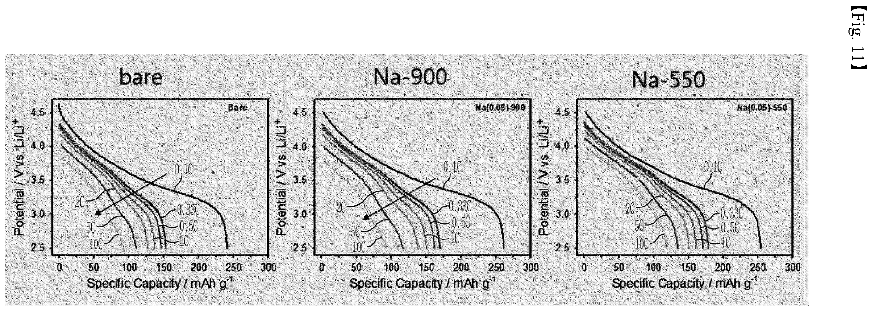

In this regard, FIG. 8 is a graph showing initial charge and discharge curves at 60°C of lithium secondary batteries manufactured according to Example 1, Comparative Example 1, and Comparative Example 2. FIG. 9 is a graph showing evaluation results of initial discharge capacity at 45°C of lithium secondary batteries manufactured according to Examples 1 to 2 and 4 to 5, and Comparative Examples 1 to 2. FIG. 10 is a graph showing evaluation results of lifespan characteristics at room temperature of 25°C of lithium secondary batteries manufactured according to Examples 1 to 2 and 4 to 5, and Comparative Examples 1 to 2. FIG. 11 is a graph showing evaluation results of rate characteristics of lithium secondary batteries manufactured according to Example 1, Comparative Example 1, and Comparative Example 2.

Referring to Tables 1 to 5 and FIGS. 8 to 11, in the case of Examples 1 to 5 in which the composition of the lithium metal oxide including the sodium doping amount, and all process conditions including the primary calcination and secondary calcination process conditions were appropriately controlled within the ranges according to the present invention, it was confirmed that physical properties of the positive electrode active material were appropriately obtained within the ranges according to the present invention, such that the outermost surface Na/Mn molar ratio of the lithium metal oxide particles was sufficiently high and concentration-doping of sodium in the surface portion was implemented. As a result, it was confirmed that capacity characteristics, lifespan characteristics, and rate characteristics of the battery were comprehensively excellent.

When Examples 1 to 5 are compared with one another, it was confirmed that, in the case of Examples 1 to 3 in which the primary calcination temperature was lower, the outermost surface Na/Mn molar ratio of the lithium metal oxide particles became higher, and the effect of concentration-doping sodium in the surface portion became superior, whereby lifespan characteristics were more preferably implemented.

Meanwhile, in the case of Reference Examples 1 to 3 in which the average particle diameter (D50) of the sodium raw material was somewhat large, the stirring speed during pulverization-mixing was too high, or wet pulverization was performed, it was confirmed that [outermost surface Na/Mn molar ratio]/[ICP Na/Mn molar ratio] became somewhat lower than those of Examples 1 to 3, and thus the effect of concentration-doping sodium in the surface portion was somewhat deteriorated. In addition, it was confirmed that capacity characteristics of the battery were somewhat deteriorated.

In the case of Comparative Example 1, as a result of not being doped with sodium, it was confirmed that capacity characteristics, lifespan characteristics, and rate characteristics of the battery were significantly deteriorated compared with the Examples.

In the case of Comparative Example 2, although the composition of the lithium metal oxide including the sodium doping amount was appropriate, as a result of performing the calcination process as one-step calcination, it was confirmed that the outermost surface Na/Mn molar ratio of the lithium metal oxide particles was low, and the effect of concentration-doping sodium in the surface portion was deteriorated. As a result, it was confirmed that capacity characteristics and rate characteristics of the battery were significantly deteriorated compared with the Examples.

In the case of Comparative Example 3, as a result of the stirring speed during pulverization-mixing being too low, it was confirmed that the outermost surface Na/Mn molar ratio of the lithium metal oxide particles was low, and the effect of concentration-doping sodium in the surface portion was deteriorated. As a result, it was confirmed that capacity characteristics of the battery were significantly deteriorated compared with the Examples.

Although preferred embodiments of the present invention have been described above, the present invention is not limited thereto, and various modifications may be made and practiced within the scope of the claims, the detailed description of the invention, and the accompanying drawings, and such modifications also naturally fall within the scope of the present invention.

Accordingly, the substantial scope of rights of the present invention should be defined by the appended claims and equivalents thereof.

## Claims

1. A positive electrode active material for a lithium secondary battery, comprising lithium metal oxide particles having a lithium- and manganese-rich composition and doped with sodium,
wherein the lithium metal oxide has a structure in which lithium layers and transition metal layers are alternately stacked,
wherein the sodium is more heavily doped into the lithium layers among the lithium layers and the transition metal layers, and
wherein the sodium is concentration-doped in a surface portion of the lithium metal oxide particles.

2. The positive electrode active material for a lithium secondary battery of claim 1,
wherein, when XPS (X-ray Photoelectron Spectroscopy) analysis is performed on an outermost surface of the lithium metal oxide particles, a molar ratio of sodium to manganese (Na/Mn) is 342 times or more an average molar ratio of sodium to manganese (Na/Mn) in the lithium metal oxide.

3. The positive electrode active material for a lithium secondary battery of claim 1,
wherein, when XPS (X-ray Photoelectron Spectroscopy) analysis is performed on an outermost surface of the lithium metal oxide particles, a molar ratio of sodium to manganese (Na/Mn) is 0.58 or more.

4. The positive electrode active material for a lithium secondary battery of claim 1,
wherein the lithium metal oxide has a molar ratio of sodium to the lithium metal oxide of 0.01 to 0.2.

5. The positive electrode active material for a lithium secondary battery of claim 1,
wherein the lithium metal oxide has a molar ratio of cobalt to the lithium metal oxide of 0.05 or less.

6. The positive electrode active material for a lithium secondary battery of claim 1,
wherein the lithium metal oxide has a molar ratio of lithium to the lithium metal oxide of 1.1 to 1.3.

7. The positive electrode active material for a lithium secondary battery of claim 1,
wherein the lithium metal oxide has a molar ratio of nickel to the lithium metal oxide of 0.1 to 0.3.

8. The positive electrode active material for a lithium secondary battery of claim 1,
wherein the lithium metal oxide has a molar ratio of manganese to the lithium metal oxide of 0.5 to 0.7.

9. The positive electrode active material for a lithium secondary battery of claim 1,
wherein the lithium metal oxide particles have an average particle diameter (D50) of 10 µm or less.

10. The positive electrode active material for a lithium secondary battery of claim 1,
wherein the lithium metal oxide is represented by the following Chemical Formula 1:
[Chemical Formula 1] Li₁₊ₐ(NiₓCo_{y}Mn_{z}Na_{w1}M_{w2})O₂
wherein, in Chemical Formula 1, 0.1≤a≤0.3, 0.1≤x≤0.3, 0≤y≤0.05, 0.5≤z≤0.7, 0.01≤w1≤0.2, 0≤w2≤0.2, a+x+y+z+w1+w2=1, and M is Zr, Al, B, Y, Mg, Ti, Nb, W, Sc, Si, V, Fe, Mo, Ce, Hf, Ta, La, Sr, Sn, Sb, Zn, Cu, Ge, Ru, Ir, or a combination thereof.

11. A method for manufacturing a positive electrode active material for a lithium secondary battery, comprising:
pulverization-mixing a lithium raw material, a nickel raw material, a manganese raw material, and a sodium raw material to form a mixture;
primarily calcining the mixture to form lithium metal oxide particles having a lithium- and manganese-rich composition; and
secondarily calcining the lithium metal oxide particles to form lithium metal oxide particles in which sodium is concentration-doped in a surface portion,
wherein a primary calcination temperature is 420°C to 800°C, and
wherein a secondary calcination temperature is 820°C to 930°C.

12. The method for manufacturing a positive electrode active material for a lithium secondary battery of claim 11,
wherein the primary calcination temperature is 420°C to 600°C.

13. The method for manufacturing a positive electrode active material for a lithium secondary battery of claim 11,
wherein the pulverization-mixing is performed by solid-state pulverization-mixing.

14. The method for manufacturing a positive electrode active material for a lithium secondary battery of claim 11,
wherein the pulverization-mixing is performed at a stirring speed of 200 rpm to 600 rpm.

15. The method for manufacturing a positive electrode active material for a lithium secondary battery of claim 11,
wherein the pulverization-mixing is performed for 5 hours to 15 hours.

16. A positive electrode for a lithium secondary battery, comprising the positive electrode active material of claim 1.

17. A lithium secondary battery comprising the positive electrode for a lithium secondary battery of claim 16.
